**Europäisches Patentamt**

**European Patent Office**

**Office européen des brevets**

(19)

(11) Veröffentlichungsnummer: **0 284 116 B1**

# EUROPÄISCHE PATENTSCHRIFT

(12)

(45) Veröffentlichungstag der Patentschrift:
14.11.90

(51) Int. Cl.⁵: **C10K 1/16, B01D 53/14**

(21) Anmeldenummer: **88200288.4**

(22) Anmeldetag: **18.02.88**

(54) Verfahren zum Regenerieren von mit Kohlendioxid und Kohlenoxisulfid beladenen Waschlösungesströmen.

(30) Priorität: **21.03.87 DE 3709364**

(43) Veröffentlichungstag der Anmeldung:
**28.09.88 Patentblatt 88/39**

(45) Bekanntmachung des Hinweises auf die Patenterteilung:
**14.11.90 Patentblatt 90/46**

(84) Benannte Vertragsstaaten:
**DE FR GB GR NL SE**

(56) Entgegenhaltungen:
**EP-A-00 129 86**
**EP-A-00 812 41**
**US-A- 3 710 546**

(73) Patentinhaber: **METALLGESELLSCHAFT AG,**
**Reuterweg 14 Postfach 3724, D-6000 Frankfurt/M.1(DE)**
Patentinhaber: **Linde Aktiengesellschaft,**
**D-8023 Höllriegelskreuth(DE)**

(72) Erfinder: **Grünewald, Gerhard, Ph.**
**Wasserburgstrasse 17, D-6500 Mainz-Gonsenheim(DE)**
Erfinder: **Kriebel, Manfred, Dr., Tiroler Strasse 61,**
**D-6000 Frankfurt am Main(DE)**

(74) Vertreter: **Rieger, Harald, Dr., Reuterweg 14,**
**D-6000 Frankfurt a.M.(DE)**

## Beschreibung

Die Erfindung betrifft ein Verfahren zum Regenerieren zweier Waschlösungsströme, die durch physikalisches Lösen mit Kohlendioxid und gegebenenfalls Kohlenoxisulfid (COS) beladen sind und durch Entspannen regeneriert werden.

Die Reinigung von Gasen durch physikalisch wirkende Waschlösungen, insbesondere die Entfernung von $H_2S$ und COS sowie $CO_2$ aus diesen Gasen, ist seit langem bekannt. Verfahren dieser Art sind im deutschen Patent 1 494 806 und in den US-Patenten 3 531 917 und 3 710 546 beschrieben. Ebenfalls bekannt ist, die beladene Waschlösung durch Entspannen, Erhitzen oder Strippen sowie auch durch eine Kombination dieser Maßnahmen zu regenerieren. Als physikalisch wirkende Waschlösungen kommen z.B. Methanol oder N-Methyl-Pyrrolidon (NMP) in Frage.

Der Erfindung liegt die Aufgabe zugrunde, unterschiedlich beladene Waschlösungsströme trotz des schwierig zu entfernenden Kohlenoxisulfids auf einfache Weise zu regenerieren. Erfindungsgemäß geschieht dies dadurch, daß man den ersten Waschlösungsstrom in eine erste Entspannungszone hinein mit einer Druckverminderung von mindestens 2 bar entspannt und dabei $CO_2$ enthaltendes Entspannungsgas freisetzt, daß man den zweiten Waschlösungsstrom in eine Stoffaustauschelemente enthaltende zweite Entspannungszone hinein mindestens teilweise entspannt, daß man das Entspannungsgas aus der ersten Entspannungszone im Gegenstrom zum zweiten Waschlösungsstrom durch die zweite Entspannungszone leitet, daß der zweite Waschlösungsstrom pro $m^3$ mindestens das dreifache an COS gegenüber dem ersten Waschlösungsstrom enthält und daß man am Kopf der zweiten Entspannungszone ein $CO_2$ und COS enthaltendes Gas abzieht.

Beim erfindungsgemäßen Verfahren wirkt das in der ersten Entspannungszone freigesetzte, $CO_2$ enthaltende Entspannungsgas in der zweiten Entspannungszone als Strippgas, welches dort aus dem zweiten Waschlösungsstrom nahezu das gesamte COS ausstrippt. Der zweite Waschlösungsstrom wird dadurch so weitgehend von COS befreit, daß eine Nachbehandlung zumeist entfallen kann.

Sollte die Entspannung des ersten Waschlösungsstroms noch keine ausreichende Freisetzung von $CO_2$ herbeiführen, so kann man die weitere Entfernung des $CO_2$ durch von außen der ersten Entspannungszone zugeführtes Abstreifgas noch verbessern. Es ist dann vorteilhaft, dieses Abstreifgas zusammen mit dem Entspannungsgas auch durch die zweite Entspannungszone zu leiten, da sowohl das Abstreifgas als auch das ausgestrippte $CO_2$ als Strippmedium gegenüber COS wirken.

Die beiden unterschiedlich beladenen Waschlösungsströme können aus zwei verschiedenen Waschkolonnen kommen, in welchen unterschiedliche Gase von $CO_2$ und COS sowie evtl. auch von $H_2S$ ganz oder weitgehend befreit werden. Es ist aber auch denkbar, daß die beiden beladenen Waschlösungsströme aus verschiedenen Behandlungsstufen ein und desselben Gases stammen.

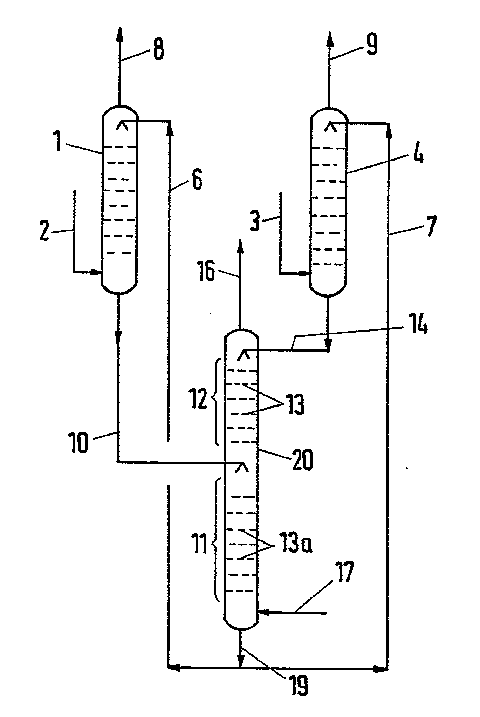

Ausgestaltungsmöglichkeiten des erfindungsgemäßen Verfahrens werden mit Hilfe der Zeichnung erläutert.

Einem ersten Waschturm (1) wird durch die Leitung (2) ein erstes Rohgas zugeführt, das $CO_2$ und gegebenenfalls geringe Mengen COS enthält. Ein zweites Rohgas, das außer $CO_2$ größere Mengen COS enthält als das erste Rohgas, wird durch die Leitung (3) einem zweiten Waschturm (4) aufgegeben. Eine physikalisch wirkende Waschlösung führt man dem ersten Waschturm durch die Leitung (6) und dem zweiten Waschturm durch die Leitung (7) zu. Die behandelten Gase strömen in den Leitungen (8) und (9) ab.

Bei den Rohgasen der Leitungen (2) und (3) kann es sich z.B. um Synthesegase mit den Hauptkomponenten $H_2$ und CO handeln, wobei das erste Rohgas gegenüber dem zweiten Rohgas der Leitung (3) viel $CO_2$ und wenig COS enthält. Der COS-Gehalt des ersten Rohgases liegt zumeist im Bereich von 0 bis 50 ppm und der COS-Gehalt des zweiten Rohgases liegt im Bereich von 20 bis 2000 ppm. Der Druck in den beiden Waschtürmen beträgt üblicherweise etwa 6 bis 100 bar und zumeist 10 bis 80 bar, in den beiden Waschtürmen herrschen Temperaturen im Bereich von +60°C bis -80°C, wobei man die Temperaturen entsprechend der jeweils verwendeten Waschlösung auswählt.

Der erste Waschlösungsstrom aus dem ersten Waschturm (1) gelangt in der Leitung (10) zur ersten Entspannungszone (11) einer Regenerationskolonne (20). Die Kolonne (20) weist im oberen Bereich eine zweite Entspannungszone (12) auf, in welcher sich Stoffaustauschelemente (13), z.B. an sich bekannte gas- und flüssigkeitsdurchlässige Böden oder Füllkörper, befinden. Dieser zweiten Entspannungszone wird in der Leitung (14) der zweite Waschlösungsstrom aus dem zweiten Waschturm (4) aufgegeben und in die zweite Entspannungszone (12) hinein entspannt.

Beim Entspannen des aus der Leitung (10) kommenden Waschlösungsstroms entsteht ein Entspannungsgas, das viel $CO_2$ enthält. Dieses Entspannungsgas strömt durch die zweite Entspannungszone (12) aufwärts im Gegenstrom zu der aus der Leitung (14) herangeführten zweiten Waschlösung, und strippt dabei deren COS ganz oder weitgehend aus. Ein COS und $CO_2$ enthaltendes Abgas wird am Kopf der Regenerationskolonne (20) durch die Leitung (16) abgezogen.

Um die Regeneration der beiden Waschlösungen insbesondere bezüglich $CO_2$ noch zu verbessern, kann man am unteren Ende der Kolonne (20) durch die Leitung (17) Abstreifgas, z.B. Stickstoff, einleiten. Dieses Abstreifgas strömt im Gegenstrom zu den Waschlösungen in der Kolonne (20) nach oben, wobei es in der ersten Entspannungszone (11) $CO_2$ ausstrippt und in der zweiten Entspannungszone (12) zusätzliches COS und ggf. auch $CO_2$ aus der Waschlösung entfernt. Das Abstreifgas wird dann mit dem Gasgemisch der Leitung (16) abgeführt. Wenn man auf das Abstreifgas der Leitung (17) verzichtet, werden die Stoffaustauschelemente (13a) in der ersten Entspannungszone (11) überflüssig.

Die Wirkung der Stoffaustauschelemente (13) in der zweiten Entspannungszone (12) soll mindestens einem theoretischen Boden entsprechen. Die Temperatur in der Regenerationskolonne (20) liegt zumeist im Bereich von +50°C bis -75°C, abhängig von den Temperaturen der zugeführten Waschlösungsströme. Der Druck in der Kolonne (20) beträgt üblicherweise 1 bis 5 bar und ist um mindestens 2 bar niedriger als in den Waschtürmen, deshalb muß die regenerierte Waschlösung aus der Leitung (19) durch nicht dargestellte Pumpen über die Leitungen (6) und (7) in die Waschtürme (1) und (4) gefördert werden.

BEISPIEL

In einer der Zeichnung entsprechenden Verfahrensführung werden den Leitungen (2) und (3) bereits entschwefelte Gase mit den Hauptkomponenten $H_2$ und CO zugeführt. Ihre Menge sowie der jeweilige Gehalt an $CO_2$ und COS ist folgender:

|  | Leitung (2) | Leitung (3) |
|---|---|---|
| Menge (Kmol/h) | 6 700 | 4 465 |
| $CO_2$ (Mol.%) | 41 | 15 |
| COS (ppm) | 5 | 100 |

In den Waschtürmen (1) und (4) werden die Gase mit NMP bei einer Temperatur von etwa 10 bis 20°C behandelt, wobei aus dem ersten Waschturm (1) pro Stunde 740 m³/h Waschlösung und aus dem zweiten Waschturm (4) 450 m³/h Waschlösung zur Regenerationskolonne (20) geführt werden. Die Reingase in den Leitungen (8) und (9) enthalten jeweils noch 3 Vol.% $CO_2$ und etwa 1 ppm COS.

Die Waschlösungsströme der Leitungen (10) und (14) weisen folgende Beladungen und Temperaturen auf:

| $Nm^3$ | Leitung (10) | Leitung(14) |
|---|---|---|
| $CO_2$ ($Kmol/m^3$) | 3,88 | 1,56 |
| COS ($Mol/m^3$) | 0,053 | 1,0 |
| Temperatur (°C) | 20 | 9 |

In der Regenerationskolonne (20), in der ein Druck von etwa 1 bar herrscht, arbeitet man ohne Abstreifgas, so daß die Leitung (17) und die Stoffaustauschelemente (13a) entfallen. Von der ersten Entspannungszone (11) strömen pro Stunde etwa 2627 Kmol Entspannungsgas, das fast nur aus $CO_2$ besteht, in die zweite Entspannungszone (12). In der Leitung (16) werden pro Stunde etwa 3180 Kmol Abgas abgezogen, das ebenfalls im wesentlichen aus $CO_2$ besteht und ca. 148 ppm COS enthält.

**Patentansprüche**

1. Verfahren zum Regenerieren zweier Waschlösungsströme, die durch physikalisches Lösen mit Kohlendioxid und gegebenenfalls Kohlenoxisulfid (COS) beladen sind und durch Entspannen regeneriert werden, dadurch gekennzeichnet, daß man den ersten Waschlösungsstrom in eine erste Entspannungszone hinein mit einer Druckverminderung von mindestens 2 bar entspannt und dabei $CO_2$ enthaltendes Entspannungsgas freisetzt, daß man den zweiten Waschlösungsstrom in eine Stoffaustauschelemente enthaltende zweite Entspannungszone hinein mindestens teilweise entspannt, daß man das Entspannungsgas aus der ersten Entspannungszone im Gegenstrom zum zweiten Waschlösungsstrom durch die zweite Entspannungszone leitet, daß der zweite Waschlösungsstrom pro m³ mindestens das dreifache an COS gegenüber dem ersten Waschlösungsstrom enthält und daß man am Kopf der zweiten Entspannungszone ein $CO_2$ und COS enthaltendes Gas abzieht.

2. Verfahren nach Anspruch 1, dadurch gekennzeichnet, daß die zweite Entspannungszone über der ersten Entspannungszone angeordnet ist und der zweite Waschlösungsstrom aus der zweiten Entspannungszone in und durch die erste Entspannungszone läuft.

3. Verfahren nach Anspruch 1 oder 2, dadurch gekennzeichnet, daß man im Gegenstrom zum ersten und zweiten Waschlösungsstrom Abstreifgas durch die beiden Entspannungszonen leitet, das man von außen der ersten Entspannungszone zuführt.

4. Verfahren nach Anspruch 1 oder einem der folgenden, dadurch gekennzeichnet, daß der Druck in den Entspannungszonen 1 bis 5 bar beträgt.

## Claims

1. Method for the regeneration of two streams of washing solution which are laden with carbon dioxide and optionally carbon oxysulphide (COS) by physical dissolving and are regenerated by pressure relief, characterised in that the first stream of washing solution undergoes pressure relief into a first pressure relief zone with a pressure reduction of at least 2 bar, and thereby $CO_2$-containing pressure relief gas is released, that the second stream of washing solution undergoes at least partial pressure relief into a second pressure relief zone containing exchange-promoting elements, that the pressure relief gas from the first pressure relief zone is passed through the second pressure relief zone in a counter-current to the second stream of washing solution, that the second stream of washing solution contains at least three times as much COS per $m^3$ as the first stream of washing solution, and that a gas containing $CO_2$ and COS is withdrawn from the top of the second pressure relief zone.

2. Method according to Claim 1, characterised in that the second pressure relief zone is located above the first pressure relief zone and the second stream of washing solution flows out of the second pressure relief zone into and through the first pressure relief zone.

3. Method according to Claim 1 or 2, characterised in that a stripping gas is passed through both pressure relief zones in a counter-current to the first and second streams of washing solution, which gas is supplied from outside the first pressure relief zone.

4. Method according to Claim 1 or one of the following Claims, characterised in that the pressure in the pressure relief zones is 1 to 5 bar.

## Revendications

1. Procédé de régénération de deux courants de solutions de lavage, qui sont chargés par dissolution physique de dioxyde de carbone et, le cas échéant, d'oxysulfure de carbone (COS) et qui sont régénérés par détente, caractérisé en ce qu'il consiste à détendre le premier courant de solution de lavage dans une première zone de détente avec un abaissement de la pression d'au moins 2 bar et à dégager ainsi un gaz de détente contenant du $CO_2$, à détendre au moins partiellement le second courant de solution de lavage dans une seconde zone de détente contenant des éléments d'échange de matière, à envoyer le gaz de détente de la première zone de détente à contre-courant du second courant de solution de lavage dans la seconde zone de détente, le second courant de solution de lavage contenant par $m^3$ au moins trois fois plus de COS que le premier courant de solution de lavage et à soutirer un gaz contenant du $CO_2$ et du COS en tête de la seconde zone de détente.

2. Procédé suivant la revendication 1, caractérisé en ce qu'il consiste à disposer la seconde zone de détente au-dessus de la première zone de détente et à faire passer le second courant de solution de lavage de la seconde zone de détente à et dans la première zone de détente.

3. Procédé suivant la revendication 1 ou 2, caractérisé en ce qu'il consiste à envoyer, à contre-courant du premier et du second courant de solution de lavage, dans les deux zones de détente, du gaz de balayage que l'on amène de l'extérieur à la première zone de détente.

4. Procédé suivant la revendication 1 ou l'une des suivantes, caractérisé en ce que la pression dans les zones de détente est comprise entre 1 et 5 bar.